# EUROPÄISCHE PATENTSCHRIFT

(11) **EP 2 170 665 B1**
(45) Veröffentlichungstag und Bekanntmachung des Hinweises auf die Patenterteilung: **29.08.2012**
(21) Anmeldenummer: 08760750.3
(22) Anmeldetag: 10.06.2008
(51) Int. Cl.: B60T 8/36, F16K 31/06

(54) **MAGNETVENTIL**
SOLENOID VALVE
ÉLECTROVANNE

(30) Priorität: 21.06.2007 DE 102007028516
(43) Veröffentlichungstag der Anmeldung: 07.04.2010
(73) Patentinhaber: Robert Bosch GmbH, 70442 Stuttgart (DE)
(72) Erfinder: KRATZER, Dietmar, 71732 Tamm (DE)
(86) Internationale Anmeldenummer: PCT/EP2008/057189
(87) Internationale Veröffentlichungsnummer: WO 2008/155256

(56) Entgegenhaltungen:
- WO-A-01/00473
- WO-A-99/42348
- WO-A-2004/055420
- JP-A- 2005 132 347

## Beschreibung

### Stand der Technik

Die Erfindung betrifft ein Magnetventil nach der Gattung des unabhängigen Patentanspruchs 1.

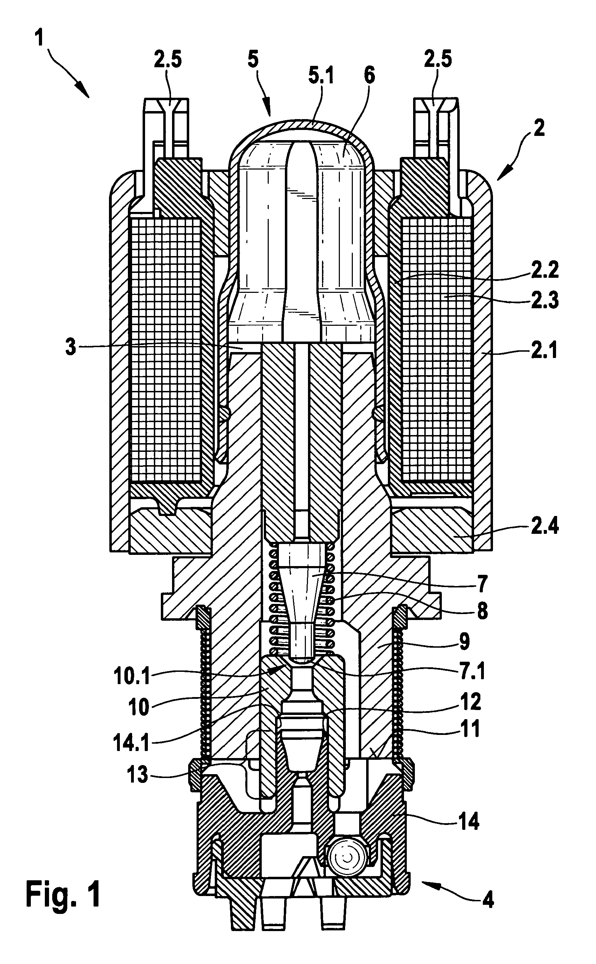

Ein herkömmliches Magnetventil, insbesondere für ein Hydraulikaggregat, welches beispielsweise in einem Antiblockiersystem (ABS) oder einem Antriebsschlupfregelsystem (ASR-System) oder einem elektronischen Stabilitätsprogrammsystem (ESP-System) eingesetzt wird, ist in Figur 1 dargestellt. Wie aus Figur 1 ersichtlich ist, umfasst das herkömmliches Magnetventil 1, das beispielsweise als stromlos offenes Regelventil ausgeführt ist, eine Magnetbaugruppe 2 zur Erzeugung eines Magnetflusses, die einen Gehäusemantel 2.1, einen Wicklungsträger 2.2, eine Spulenwicklung 2.3 und eine Abdeckscheibe 2.4 umfasst, und eine Ventilpatrone 5, die eine Kapsel 5.1, einen mit der Kapsel über eine Dichtschweißung verbundenen Ventileinsatz 9, einen Anker 6 mit einem als Stößel ausgeführten ersten Schließelement 7 und eine Rückstellfeder 8 umfasst. Die Magnetbaugruppe 2 erzeugt eine Magnetkraft, die den längsbeweglichen Anker 6 mit dem als Stößel ausgeführten ersten Schließelement 7 entgegen der Kraft der Rückstellfeder 8 gegen den Ventileinsatz 9 bewegt. Die auf den Wicklungsträger 2.2 gewickelte Spulenwicklung 2.3 bildet eine elektrische Spule, die über elektrische Anschlüsse 2.5 ansteuerbar ist. Der Ventileinsatz 9 leitet den von der Magnetbaugruppe 2 über die Abdeckscheibe 2.4 eingeleiteten Magnetfluss axial über einen Luftspalt 3 in Richtung Anker 6. Durch Bestromung der Spulenwicklung 2.3 über die elektrischen Anschlüsse 2.5 und den dadurch erzeugten Magnetfluss wird der Anker 6 entgegen der Kraft der Rückstellfeder 8 gegen den Ventileinsatz 9 bewegt.

Zudem nimmt der Ventileinsatz 9 den so genannten Ventilkörper 10 auf, der einen Hauptventilsitz 10.1 umfasst, in welchen das als Stößel ausgeführte erste Schließelement 7 über ein als Dichtkalotte ausgeführtes Hauptdichtelement 7.1 dichtend eintaucht, um die Dichtfunktion des Magnetventils 1 umzusetzen. Wie weiter aus Figur 1 ersichtlich ist, umfasst das herkömmliche Magnetventil 1 ein exzentrisch angeordnetes Rückschlagventil 4, das eine richtungsorientierte Durchflussfunktion ausführt. Als wesentliche Teile umfasst das Rückschlagventil 4 des herkömmlichen Magnetventils 1 ein bewegliches Dichtelement, einen in einem Ventilbauelement 14 angeordneten Rückschlagventilsitz und eine Hubbegrenzung bzw. Anlage, die hier von einem Flachfilter gebildet wird, um den maximalen Hub des beweglichen Dichtelements zu begrenzen. Das exzentrisch zu der Ventilhauptachse positionierte Rückschlagventil 4 weist in der Regel eine Kugel-Hohlkegel-Form auf. Das als Kunststoffeinsatz ausgeführte Ventilbauelement 14 bildet das Ventilunterteil und dient zusätzlich zur Abdichtung zu einem umgebenden Fluidblock, zur Abdichtung zum Ventilkörper 10 und zur Aufnahme eines Ringfilters und des Flachfilters.

Das Ventilbauelement 14 wird über einen Dom 13 in eine Innenbohrung 14.1 des Ventilkörpers 10 eingeschoben und dichtet dort druckunterstützt an einer Dichtstelle 12 ab. Der Ventilkörper 10 ist in den Ventileinsatz 9 eingepresst, wobei der Hauptdichtsitz 10.1 oben am Ventilkörper 10 angeordnet ist und der Pressdurchmesser zum Ventileinsatz 9 tiefer liegt. Zudem stützt sich das Ventilbauelement 14 axial auf dem Ventileinsatz 9 mit einer Fläche 11 ab.

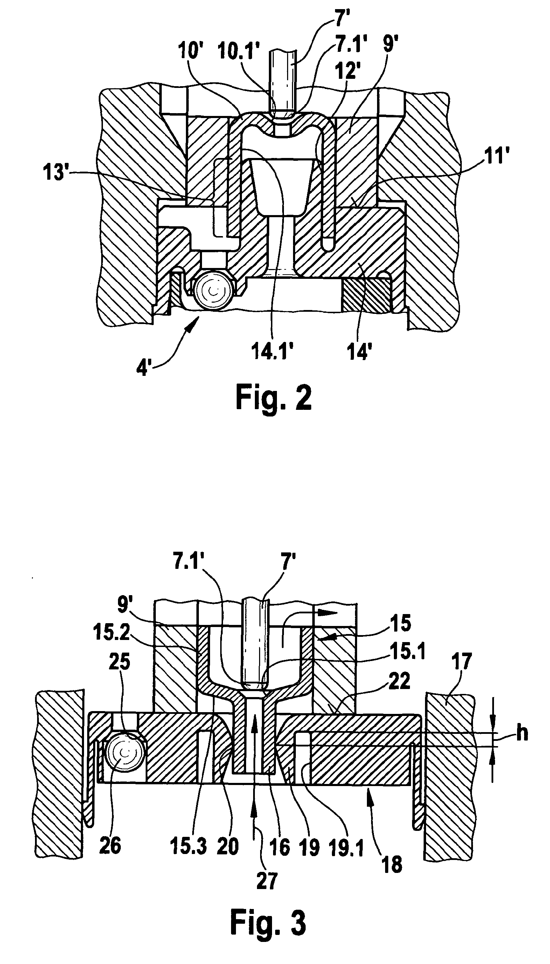

Fig. 2 zeigt eine alternative Ausführungsform, bei der der Ventilkörper 10' als Hülse ausgefiihrt ist und in den Ventileinsatz 9' eingepresst ist. Analog zu Fig. 1 umfasst der Ventilkörper 10' einen Hauptventilsitz 10.1', in welchen das als Stößel ausgeführte erste Schließelement 7' über ein als Dichtkalotte ausgeführtes Hauptdichtelement 7.1' dichtend eintaucht, um die Dichtfunktion des Magnetventils 1 umzusetzen. Wie weiter aus Figur 2 ersichtlich ist, umfasst das dargestellte als Kunststoffeinsatz ausgeführte Ventilbauelement 14' ein exzentrisch angeordnetes Rückschlagventil 4', das eine richtungsorientierte Durchflussfunktion ausführt. Das Ventilbauelement 14' bildet das Ventilunterteil und dient zusätzlich zur Abdichtung zu einem umgebenden Fluidblock, zur Abdichtung zum Ventilkörper 10' und zur Aufnahme eines Ringfilters und eines Flachfilters. Das Ventilbauelement 14' wird ebenfalls über einen Dom 13' in eine Innenbohrung 14.1' des Ventilkörpers 10' eingeschoben und dichtet dort druckunterstützt an einer Dichtstelle 12' ab. Der Ventilkörper 10' ist in den Ventileinsatz 9' eingepresst, wobei der Hauptdichtsitz 10.1' oben am Ventilkörper 10' angeordnet ist und der Pressdurchmesser zum Ventileinsatz 9' tiefer liegt. Zudem stützt sich das Ventilbauelement 14' axial auf dem Ventileinsatz 9' mit einer Fläche 11' ab.

Da bei beiden herkömmlichen Ausführungsbeispielen gemäß Fig. 1 und 2 der Dom 13, 13' des Ventilbauelements 14, 14' zur Abdichtung in die Ventilkörperinnenbohrung 14.1, 14.1' hineinragt, steht der Dom 13, 13' als relativ dünnes Teil über das recht massive Volumen der Ventilbaugruppe 14, 14' hinaus. Daneben ist der Dom 13, 13' durch die sehr kleinen Dimensionen recht filigran und damit wenig robust bezüglich Festigkeit ausgeführt. Das ist bei der Abdichtung im Ventilkörper 10, 10' an den Positionen 12 bzw. 12' problematisch, und die Dichtfunktion muss mit relativ großem Aufwand sichergestellt werden.

Die Offenlegungsschrift JP 2005 132347 A offenbart beispielsweise ein Magnetventil, welches eine Magnetbaugruppe und eine Ventilpatrone aufweist, die einen Ventileinsatz, ein innerhalb des Ventileinsatzes beweglich geführtes Schließelement und einen Ventilkörper umfasst, der in den Ventileinsatz eingepresst ist. Hierbei weist ein Hauptventil ein mit dem Schließelement verbundenes Hauptdichtelement und einen im Ventilkörper angeordneten Hauptventilsitz auf, wobei eine von der Magnetbaugruppe erzeugte Magnetkraft das Schließelement in Richtung Ventilkörper bewegt, wodurch das Hauptdichtelement dichtend in den Hauptventilsitz eintaucht. Zudem ist der Ventilkörper als Hülse ausgeführt, deren offenes Ende in den Ventileinsatz eingepresst ist, wobei der Hauptventilsitz mit einer Durchgangsöffnung innen an einem haubenförmigen Ende der Ventilkörperhülse angeordnet ist.

Die Offenlegungsschrift WO 99/42348 A1 offenbart ein Magnetventil für eine schlupfgeregelte hydraulische Fahrzeugbremsanlage. Das offenbarte Magnetventil umfasst eine Dichtung auf einer Ventilsitzfortsetzung mit Dichtlippen, wobei die Ventilfortsetzung nicht an einer Ventilkörperhülse angeordnet ist.

### Offenbarung der Erfindung

Das erfindungsgemäße Magnetventil mit den Merkmalen des unabhängigen Patentanspruchs 1 hat demgegenüber den Vorteil, dass ein als Hülse ausgeführter Ventilkörper mit einem offenen Ende in einen Ventileinsatz eingepresst ist, wobei ein Hauptventilsitz mit einer Durchgangsöffnung innen an einem haubenförmigen Ende der Ventilkörperhülse angeordnet ist. Zudem ist die Ventilkörperhülse am haubenförmigen Ende durch eine rohrförmige Fortsetzung verlängert ausgeführt, so dass die Abdichtung mit einen Ventilbauelement über eine an der rohrförmigen Fortsetzung außen dichtend anliegenden Dichtlippe herstellbar ist. Die neue Formgebung der Abdichtung zwischen dem Ventilbauelement und dem Ventilkörper enmöglicht in vorteilhafter Weise eine robustere Ausführung und eine sichere Dichtfunktion. Die zur Abdichtung und Einsetzung notwendige axiale Überdeckung von Ventilkörper und Ventilbauelement wird durch die Verlängerung des Ventilkörpers erreicht, der vorzugsweise als robustes Metallbauteil, insbesondere als Stahlbauteil ausgeführt ist. Zudem kann das Ventilbauelement gleichförmiger ausgeführt werden. Die höhere Robustheit führt in vorteilhafter Weise zu einem geringeren Absicherungsaufwand, und die gleichförmigere Gestaltung führt insbesondere bei Kunststoffteilen zu einfacheren Herstellprozessen mit einfachen Werkzeugen und erhöht wiederum die Robustheit des Bauteils.

Durch die in den abhängigen Ansprüchen aufgeführten Maßnahmen und Weiterbildungen sind vorteilhafte Verbesserungen des im unabhängigen Patentanspruch 1 angegebenen Magnetventils möglich.

Besonders vorteilhaft ist, dass die Dichtlippe mittels einer entsprechenden Gestaltung einer im Ventilbauelement angeordneten ersten Ringnut durch die Druckdifferenz und/oder Strömungsrichtung des Betriebsmediums druckunterstützt dichtend gegen die rohrförmige Fortsetzung gepresst wird. Der Grad der Druckunterstützung kann beispielsweise über einen Längenunterschied zwischen einem Dichtbereich der Dichtlippe an der rohrförmigen Fortsetzung und einer Tiefe einer im Ventilbauelement angeordneten ersten Ringnut eingestellt werden. Über den Längenunterschied kann das Verhältnis einer dichtungsverstärkend wirkenden Fläche zu einer dichtungslösend wirkenden Fläche eingestellt werden.

In Ausgestaltung des erfindungsgemäßen Magnetventils kann die Dichtlippe des Ventilbauelements nach unten verlängert werden und unterhalb der rohrförmigen Fortsetzung eine Verengung aufweisen, deren Durchmesser zur Einstellung einer gewünschten Drosselwirkung vorgegeben werden kann. Dies ermöglicht in vorteilhafter Weise eine einfache Variantenbildung, um das Magnetventil in Abhängigkeit von den Systemerfordernissen mit unterschiedlichen Drosselgrößen realisieren zu können.

Die Dichtlippe des Ventilbauelements wird durch die Abdichtung auf der Fortsetzung des Ventilkörpers verformt. Damit diese Verformung keinen oder nur einen verminderten Einfluss auf die Rundheit eines exzentrisch angeordneten Rückschlagventilsitzes hat, kann der Rückschlagventilsitz durch geeignete Entkopplungsmittel von der Dichtlippe entkoppelt werden. Die Entkoppelung kann beispielsweise durch eine bewusst herbeigeführte Reduzierung der Steifigkeit des Ventilbauelements umgesetzt werden. Die Steifigkeit des Ventilbauelements kann beispielsweise durch Einführung von mindestens einer umlaufenden zweiten Ringnut reduziert werden. Die mindestens eine umlaufende zweite Ringnut kann durch Radialrippen örtlich versteift werden.

Vorteilhafte, nachfolgend beschriebene Ausführungsformen der Erfindung sowie die zu deren besserem Verständnis oben erläuterten, herkömmlichen Ausführungsbeispiele sind in den Zeichnungen dargestellt. In den Zeichnungen bezeichnen gleiche Bezugszeichen Komponenten bzw. Elemente, die gleiche bzw. analoge Funktionen ausführen.

### Kurze Beschreibung der Zeichnungen

Fig. 1 zeigt eine schematische Schnittdarstellung eines herkömmlichen Magnetventils.
Fig. 2 zeigt eine schematische Schnittdarstellung eines unteren Bereichs eines herkömmlichen Magnetventils.
Fig. 3 zeigt eine schematische Schnittdarstellung einer ersten Ausführungsform eines unteren Bereichs eines erfindungsgemäßen Magnetventils.
Fig. 4 zeigt eine schematische Schnittdarstellung einer zweiten Ausführungsform eines unteren Bereichs eines erfindungsgemäßen Magnetventils.

### Ausführungsformen der Erfindung

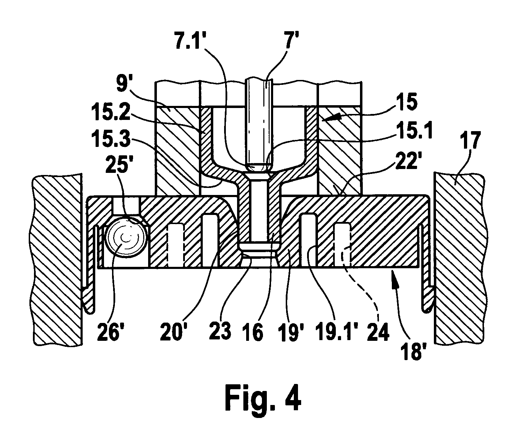

Wie aus Fig. 3 und 4 ersichtlich ist, ist der Ventilkörper 15 als Hülse ausgeführt, die im Unterschied zum Stand der Technik gemäß Fig. 2 "umgedreht" in einen Ventileinsatz 9' eingepresst ist, d.h. ein in der Zeichnung oben angeordnetes offenes Ende 15.2 der Ventilkörperhülse 15 ist in den Ventileinsatz 9' eingepresst, wobei ein Hauptventilsitz 15.1 mit einer Durchgangsöffnung innen an einem haubenförmigen Ende 15.3 der Ventilkörperhülse 15 angeordnet ist, die in der Zeichnung unten angeordnet ist. Zudem ist die Ventilkörperhülse 15 am haubenförmigen Ende 15.3 durch eine rohrförmige Fortsetzung 16 verlängert ausgeführt, so dass eine erforderliche axiale Überdeckung zur Abdichtung zwischen der Ventilkörperhülse 15 und einem Ventilbauelement 18, 18' hergestellt wird, welches das Ventilunterteil bildet. Zur Abdichtung liegt eine Dichtlippe 19, 19' des Ventilbauelements 18, 18' an einem Dichtbereich 20, 20' außen dichtend an der rohrförmigen Fortsetzung 16 der Ventilkörperhülse 15 an. Zudem stützt sich das Ventilbauelement 18, 18' axial auf dem Ventileinsatz 9' mit einer Fläche 22, 22' ab. Die Ventilkörperhülse 15 ist mit der rohrförmigen Fortsetzung als Metallteil, vorzugsweise als Stahlteil ausgeführt, und das Ventilbauelement 18, 18' ist als Kunststoffteil ausgeführt.

Bei den Ausführungsformen gemäß Fig. 3 und 4 wird das Schließelement 7' jeweils durch eine von einer nicht dargestellten Magnetbaugruppe erzeugten Magnetkraft in Richtung des Ventilkörpers 15 bewegt, wodurch das Hauptdichtelement 7.1' dichtend in den Hauptventilsitz 15.1 eintaucht, so dass ein Hauptfluidstrom, der von unten gegen das beispielsweise als Dichtkalotte ausgeführte Hauptdichtelement 7.1' drückt, eingestellt werden kann. Bei einer Ausführung als stromlos offenes Magnetventil hält eine Rückstellfeder den Hauptventilsitz 15.1 im stromlosen Zustand geöffnet. Die nicht dargestellte Magnetbaugruppe, welche die Magnetkraft und den Magnetfluss erzeugt, um das Schließelement 7' bei Bestromung gegen den Ventilkörper 15 zu bewegen, und der obere Bereich des erfindungsgemäßen Magnetventils können analog zu dem in Fig. 1 dargestellten Magnetventil 1 mit der Magnetbaugruppe 2 ausgeführt, werden.

Wie aus Fig. 3 weiter ersichtlich ist, wird die Dichtlippe 19 am Dichtbereich 20 mittels einer entsprechende Gestaltung einer im Ventilbauelement 18 angeordneten ersten Ringnut 19.1 durch die Druckdifferenz und/oder Strömungsrichtung des Betriebsmediums, siehe Richtungspfeile 27, druckunterstützt dichtend gegen die rohrförmige Fortsetzung 16 gepresst. Der Grad der Druckunterstützung kann über einen Längenunterschied h zwischen dem Dichtbereich 20 der Dichtlippe 19 an der rohrförmigen Fortsetzung 16 und einer Tiefe der im Ventilbauelement 18 angeordneten ersten Ringnut 19.1 eingestellt werden. Das bedeutet, dass über den Längenunterschied h das Verhältnis einer dichtungsverstärkend wirkenden Fläche zu einer dichtungslösend wirkenden Fläche der Dichtlippe 19 eingestellt werden kann, wobei gilt h>0.

Im Unterschied zur ersten Ausführungsform gemäß Fig. 3 ist bei der zweiten Ausführungsform gemäß Fig. 4 die Dichtlippe 19' des Ventilbauelements 18' nach unten verlängert ausgeführt und weist unterhalb der rohrförmigen Fortsetzung 16 eine Verengung 23 auf, deren Durchmesser zur Einstellung einer gewünschten Drosselwirkung vorgegeben werden kann. Dies ermöglicht in vorteilhafter Weise eine einfache Variantenbildung, um das Magnetventil in Abhängigkeit von den Systemerfordernissen mit unterschiedlichen Drosselgrößen realisieren zu können.

Bei allen erfindungsgemäßen Ausführungsformen ist auf eine strömungsgünstige Gestaltung des Strömungseinlasses zu achten. Zudem bleibt die Abdichtung des Ventilbauelements 18, 18' zum Fluidblock 17 im Vergleich zum Stand der Technik jeweils unverändert. Während des Magnetventilbetriebs wird die Dichtlippe 19, 19' des Ventilbauelements 18, 18' durch die Abdichtung auf der Fortsetzung 16 der Ventilkörperhülse 15 verformt. Damit diese Verformung keinen oder nur einen minimalen Einfluss auf die Rundheit eines exzentrisch zur Hauptventilachse angeordneten Rückschlagventilsitzes 25, 25' aufweist, der mit einem korrespondierenden Dichtelement 26, 26' zusammenwirkt, kann durch eine bewusst herbeigeführte Verringerung der Steifigkeit des Ventilbauelements 18, 18' eine Entkoppelung umgesetzt werden.

Die Steifigkeit des Ventilbauelements 18' kann, wie aus Fig. 4 ersichtlich ist, beispielsweise durch Einführung von mindestens einem umlaufenden, nicht massiv ausgeführten Teilbereich vermindert werden, der hier beispielhaft als umlaufende zweite Ringnut 24 ausgeführt ist, wobei die zweite Ringnut 24 gestrichelt gezeichnet ist. Die umlaufende zweite Ringnut 24 kann bei Bedarf durch nicht dargestellte Radialrippen örtlich versteift werden.

Das erfindungsgemäße Magnetventil ermöglicht eine robuste und gleichförmige Gestaltung des Ventilbauelements, das den unteren Bereich des Magnetventils bildet, wodurch die Dichtfunktion zwischen dem Ventilkörper und dem Ventilbaubauelement mit einem relativ geringen Aufwand sichergestellt werden kann. Zudem kann das Ventilbauelement durch die gleichförmigere Gestaltung durch einfachere Herstellprozesse mit einfacheren Werkzeugen hergestellt werden.

## Patentansprüche

1. Magnetventil mit einer Magnetbaugruppe (2) und einer Ventilpatrone (5), die einen Ventileinsatz (9'), ein innerhalb des Ventileinsatzes (9') beweglich geführtes Schließelement (7') und einen Ventilkörper (15) umfasst, der in den Ventileinsatz (9') eingepresst ist, wobei ein Hauptventil ein mit dem Schließelement (7') verbundenes Hauptdichtelement (7.1') und einen im Ventilkörper (15) angeordneten Hauptventilsitz (15.1) aufweist, wobei eine von der Magnetbaugruppe erzeugte Magnetkraft das Schließelement (7') in Richtung Ventilkörper (15) bewegt, wodurch das Hauptdichtelement (7.1') dichtend in den Hauptventilsitz (15.1) eintaucht, wobei der Ventilkörper (15) als Hülse ausgeführt ist, deren offenes Ende (15.2) in den Ventileinsatz (9') eingepresst ist, und wobei der Hauptventilsitz (15.1) mit einer Durchgangsöffnung innen an einem haubenförmigen Ende (15.3) der Ventilkörperhülse (15) angeordnet ist, **dadurch gekennzeichnet, dass** die Ventilkörperhülse (15) am haubenförmigen Ende (15.3) durch eine rohrförmige Fortsetzung (16) verlängert ausgeführt ist, so dass eine Abdichtung zu einem Ventilbauelement (18, 18'), welches ein Ventilunterteil bildet, über eine an der rohrförmigen Fortsetzung (16) außen dichtend anliegenden Dichtlippe (19, 19') des Ventilbauelements (18, 18') hergestellt ist.

2. Magnetventil nach Anspruch 1, **dadurch gekennzeichnet, dass** die Dichtlippe (19, 19') mittels einer entsprechenden Gestaltung einer im Ventilbauelement (18, 18') angeordneten ersten Ringnut (19.1, 19.1') durch die Druckdifferenz und/oder Strömungsrichtung des Betriebsmediums druckunterstützt dichtend gegen die rohrförmige Fortsetzung (16) gepresst ist.

3. Magnetventil nach Anspruch 2, **dadurch gekennzeichnet, dass** der Grad der Druckunterstützung über einen Längenunterschied (h) zwischen einem Dichtbereich (20, 20') der Dichtlippe (19, 19') an der rohrförmigen Fortsetzung (16) und einer Tiefe der im Ventilbauelement (18, 18') angeordneten ersten Ringnut (19.1, 19.1') einstellbar ist, wobei über den Längenunterschied (h) das Verhältnis einer dichtungsverstärkend wirkenden Fläche zu einer dichtungslösend wirkenden Fläche einstellbar ist.

4. Magnetventil nach einem der Ansprüche 1 bis 3, **dadurch gekennzeichnet, dass** der Ventilkörper (15) als Metallteil, vorzugsweise als Stahlteil, und das Ventilbauelement (18, 18') als Kunststoffteil ausgeführt ist.

5. Magnetventil nach einem der Ansprüche 1 bis 4, **dadurch gekennzeichnet, dass** die Dichtlippe (19') des Ventilbauelements (18') nach unten verlängert ist und unterhalb der rohrförmigen Fortsetzung (16) eine Verengung (23) aufweist, deren Durchmesser zur Einstellung einer gewünschten Drosselwirkung vorgebbar ist.

6. Magnetventil nach einem der Ansprüche 1 bis 5, **gekennzeichnet durch** einen exzentrisch im Ventilbauelement (18, 18') angeordneten Rückschlagventilsitz (25, 25'), der **durch** geeignete Entkopplungsmittel (24) von der an der rohrförmigen Fortsetzung (16) dichtenden Dichtlippe (19, 19') entkoppelt ist.

7. Magnetventil nach Anspruch 6, **dadurch gekennzeichnet, dass** die Entkoppelung durch eine bewusst herbeigeführte Reduzierung der Steifigkeit des Ventilbauelements (18') umgesetzt ist.

8. Magnetventil nach Anspruch 6 oder 7, **dadurch gekennzeichnet, dass** die Steifigkeit des Ventilbauelements (18') durch Einführung von mindestens einer umlaufenden zweiten Ringnut (24) reduziert ist.

9. Magnetventil nach Anspruch 8, **dadurch gekennzeichnet, dass** die mindestens eine umlaufende zweite Ringnut (24) durch Radialrippen örtlich versteift ist.

## Claims

1. Solenoid valve, with a magnetic subassembly (2) and with a valve cartridge (5) which comprises a valve insert (9'), a closing element (7') guided movably within the valve insert (9') and a valve body (15) which is pressed into the valve insert (9'), a main valve having a main sealing element (7.1') connected to the closing element (7') and a main valve seat (15.1) arranged in the valve body (15), a magnetic force generated by the magnetic subassembly moving the closing element (7') in the direction of the valve body (15), with the result that the main sealing element (7.1') penetrates sealingly into the main valve seat (15.1), the valve body (15) being designed as a sleeve, the open end (15.2) of which is pressed into the valve insert (9'), and the main valve seat (15.1) being arranged with a through orifice on the inside at a hood-shaped end (15.3) of the valve body sleeve (15), **characterized in that** the valve body sleeve (15) is designed to be prolonged at the hood-shaped end (15.3) by a tubular extension (16), so that sealing-off with respect to a valve structural element (18, 18') forming a valve lower part is effected via a sealing lip (19, 19') of the valve structural element (18, 18'), the said sealing lip bearing sealingly on the outside against the tubular extension (16).

2. Solenoid valve according to Claim 1, **characterized in that** the sealing lip (19, 19') is pressed sealingly against the tubular extension (16) by means of a corresponding configuration of a first annular groove (19.1, 19.1') arranged in the valve structural element (18, 18') and with the assistance of pressure caused by the pressure difference and/or the direction of flow of the operating medium.

3. Solenoid valve according to Claim 2, **characterized in that** the degree of pressure assistance can be set via a length difference (h) between a sealing region (20, 20') of the sealing lip (19, 19') on the tubular extension (16) and a depth of the first annular groove (19.1, 19.1') arranged in the valve structural element (18, 18'), the ratio of an area exerting a sealing-reinforcing action to an area exerting a sealing-releasing action being capable of being set via the length difference (h).

4. Solenoid valve according to one of Claims 1 to 3, **characterized in that** the valve body (15) is produced as a metal part, preferably as a steel part, and the valve structural element (18, 18') as a plastic part.

5. Solenoid valve according to one of Claims 1 to 4, **characterized in that** the sealing lip (19') of the valve structural element (18') is prolonged downwards and below the tubular extension (16) has a contraction (23), the diameter of which can be stipulated for the purpose of setting a desired throttle action.

6. Solenoid valve according to one of Claims 1 to 5, **characterized by** a non-return valve seat (25, 25') which is arranged eccentrically in the valve structural element (18, 18') and which is decoupled by suitable decoupling means (24) from the sealing lip (19, 19') which seals on the tubular extension (16).

7. Solenoid valve according to Claim 6, **characterized in that** decoupling is implemented by a deliberately induced reduction in the rigidity of the valve structural element (18').

8. Solenoid valve according to Claim 6 or 7, **characterized in that** the rigidity of the valve structural element (18') is reduced by the introduction of at least one continuous second annular groove (24).

9. Solenoid valve according to Claim 8, **characterized in that** the at least one continuous second annular groove (24) is stiffened locally by means of radial ribs.

## Revendications

1. Électrovanne comprenant un module magnétique (2) et une cartouche d'électrovanne (5) qui comprend un insert d'électrovanne (9'), un élément de fermeture (7') guidé de manière mobile à l'intérieur de l'insert d'électrovanne (9') et un corps de soupape (15) qui est enfoncé dans l'insert d'électrovanne (9'), une soupape principale comprenant un élément d'étanchéité principal (7.1') relié à l'élément de fermeture (7') et un siège de soupape principale (15.1) disposé dans le corps de soupape (15), une force magnétique produite par le module magnétique déplaçant l'élément de fermeture (7') en direction du corps de soupape (15), de sorte que l'élément d'étanchéité principal (7.1') plonge hermétiquement dans le siège de soupape principale (15.1), le corps de soupape (15) étant réalisé sous forme de douille dont l'extrémité ouverte (15.2) est enfoncée dans l'insert d'électrovanne (9'), et le siège de soupape principale (15.1) doté d'une ouverture traversante étant disposé à l'intérieur à une extrémité (15.3) en forme de coiffe de la douille de corps de soupape (15), **caractérisée en ce que** la douille de corps de soupape (15) est réalisée de manière prolongée à l'extrémité (15.3) en forme de coiffe par une extension tubulaire (16), de manière à réaliser l'étanchéité par rapport à un élément structural d'électrovanne (18, 18'), qui forme une partie inférieure d'électrovanne, par l'intermédiaire d'une lèvre d'étanchéité (19, 19') de l'élément structural d'électrovanne (18, 18') s'appliquant hermétiquement à l'extérieur contre l'extension tubulaire (16).

2. Électrovanne selon la revendication 1, **caractérisée en ce que** la lèvre d'étanchéité (19, 19'), grâce à une configuration correspondante d'une première rainure annulaire (19.1, 19.1') disposée dans l'élément structural d'électrovanne (18, 18'), est pressée hermétiquement contre l'extension tubulaire (16) de manière assistée par la pression grâce à la différence de pression et/ou la direction d'écoulement du fluide de travail.

3. Électrovanne selon la revendication 2, **caractérisée en ce que** le degré de l'assistance par pression peut être réglé au moyen d'une différence de longueur (h) entre une région d'étanchéité (20, 20') de la lèvre d'étanchéité (19, 19') contre l'extension tubulaire (16) et une profondeur de la première rainure annulaire (19.1, 19.1') disposée dans l'élément structural d'électrovanne (18, 18'), le rapport d'une surface agissant de manière à renforcer l'étanchéité à une surface agissant de manière à supprimer l'étanchéité pouvant être réglé au moyen de la différence de longueur (h).

4. Électrovanne selon l'une quelconque des revendications 1 à 3, **caractérisée en ce que** le corps de soupape (15) est réalisé sous forme de pièce métallique, de préférence sous forme de pièce en acier, et l'élément structural d'électrovanne (18, 18') est réalisé sous forme de pièce en plastique.

5. Électrovanne selon l'une quelconque des revendications 1 à 4, **caractérisée en ce que** la lèvre d'étanchéité (19') de l'élément structural d'électrovanne (18') est prolongée vers le bas et comporte, en dessous de l'extension tubulaire (16), un étranglement (23) dont le diamètre peut être prédéfini en vue du réglage d'un effet d'étranglement souhaité.

6. Électrovanne selon l'une quelconque des revendications 1 à 5, **caractérisée par** un siège de soupape anti-retour (25, 25') qui est disposé de manière excentrée dans l'élément structural d'électrovanne (18, 18') et qui est désaccouplé, par des moyens de désaccouplage (24) appropriés, de la lèvre d'étanchéité (19, 19') assurant l'étanchéité sur l'extension tubulaire (16).

7. Électrovanne selon la revendication 6, **caractérisée en ce que** le désaccouplage est réalisé par une réduction, provoquée intentionnellement, de la rigidité de l'élément structural d'électrovanne (18').

8. Électrovanne selon la revendication 6 ou 7, **caractérisée en ce que** la rigidité de l'élément structural d'électrovanne (18') est réduite par l'introduction d'au moins une deuxième rainure annulaire périphérique (24).

9. Électrovanne selon la revendication 8, **caractérisée en ce que** l'au moins une deuxième rainure annulaire périphérique (24) est rigidifiée localement par des nervures radiales.
